Europäisches Patentamt

(19) European Patent Office

Office européen des brevets

(11) Publication number: **0 290 242**
**A2**

## EUROPEAN PATENT APPLICATION

(21) Application number: 88304038.8

(22) Date of filing: 05.05.88

(51) Int. Cl.⁴: **G 02 B 6/42**

(30) Priority: 08.05.87 US 47349

(43) Date of publication of application:
09.11.88 Bulletin 88/45

(84) Designated Contracting States: **DE FR GB IT**

(71) Applicant: **SIMMONDS PRECISION PRODUCTS INC.**
**150 White Plains Road**
**Tarrytown New York 10591 (US)**

(72) Inventor: **Patriquin, Douglas Redfield**
**RD No. 2, Box 287**
**Hinesburg Vermont 05461 (US)**

(74) Representative: **Knott, Stephen Gilbert et al**
**MATHISEN, MACARA & CO. The Coach House 6-8**
**Swakeleys Road**
**Ickenham Uxbridge Middlesex UB10 8BZ (GB)**

(54) Emitter/detector for optical fibre systems.

(57) A combined optical emitter/detector that permits both the introduction of light energy onto an optical fibre and the sensing of optical energy from the fibre includes a light emitter (36), such as a laser diode or a light emitting diode, positioned to introduce optical energy onto an optical fibre and a plurality of photodetectors (18, 20, 22, 24) positioned about the emitter for receiving optical energy from the optical fibre. In a preferred embodiment, the photodetectors (18, 20, 22, 24) are arranged about the centrally disposed emitter (36) and series-connected to provide a voltage output that is the sum of their individual contributions. The emitter and detectors can be designed to operate on the same wavelength or different wavelengths where wavelength multiplexed communications are desired.

Fig.1.

EP 0 290 242 A2

Bundesdruckerei Berlin

**Description**

## EMITTER/DETECTOR FOR OPTICAL FIBRE SYSTEMS

The present invention relates to optical devices and, more particularly, to optical emitter/detector devices for interfacing with optical fibres and optical fibre systems in which optical energy is introduced into and removed from optical fibres.

Optical fibre systems use modulated light energy to convey information from a source to a destination. In general, optical energy is introduced into a core by aligning an optical source, such as a laser diode or a light emitting diode, with the core and launching the light from the emitter into the core. Conversely, optical energy is removed by directing light from the core at the destination end onto the photo-responsive surface of a photodiode or phototransistor. Where duplex communication is desired, the source and destination ends of the transmission fibre are terminated with splitters which include ports for the optical fibre, for an emitter and for a detector. In addition to discrete splitters, optical energy can also be introduced onto and removed from a transmission fibre using lateral couplings and various types of splices and taps.

While optical fibres, per se, can transmit optical energy with acceptable attenuation, the introduction or removal of light energy through a discrete interface, such as present in splitters and star-type couplings, can cause undesired attenuation in the optical energy. Each interface represents an opportunity for mis-alignment or the introduction of contaminants which can interfere with the efficient transmission of optical energy.

According to the invention there is provided an emitter/detector of the kind comprising an optical energy detector device for receiving optical energy from an end of an optical fibre and an optical energy emitter device for emitting radiation to said optical fibre, characterised in that the optical energy detector device comprises a plurality of optical energy detectors having radiation receiving surfaces aligned to receive said optical energy, said optical energy emitter device comprising an optical energy emitter positioned within the area of said radiation receiving surfaces of said optical energy detectors, for emitting said radiation.

The following is a more detailed descrition of an embodiment of the invention, by way of example, reference being made to the accompanying drawings, in which like parts are designated by like reference characters:-

FIG. 1 is a plan view of an emitter/detector mounted on a substrate; and

FIG. 2 is a side elevational view of the emitter/detector illustrated in FIG. 1.

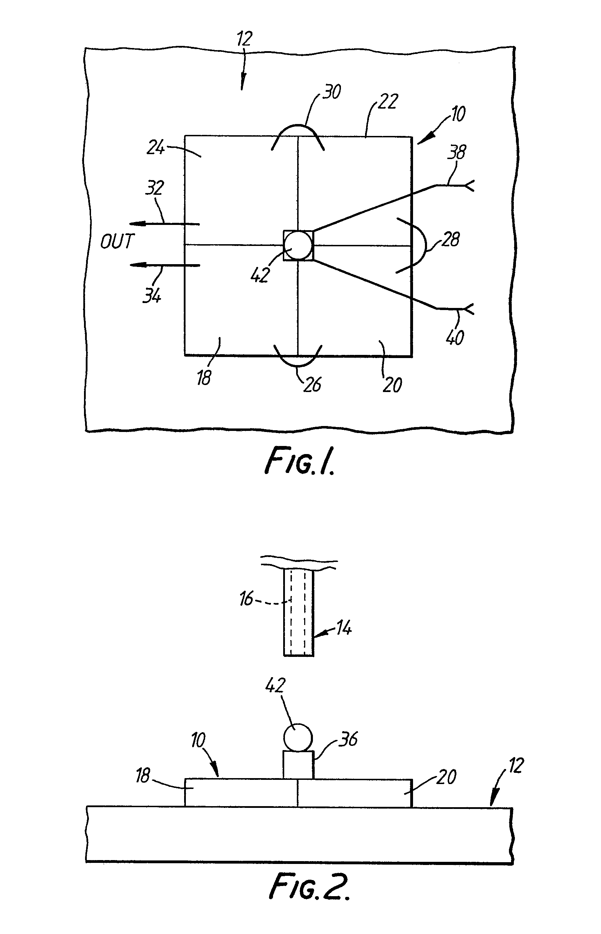

An emitter/detector of FIGS. 1 and 2 is designated generally therein by the reference character 10. As shown, the emitter/detector 10 is mounted in a substrate 12 and aligned, as shown in FIG. 2, with the end of an optical fibre 14. The optical fibre 14 is of conventional design and includes a light transmitting core 16 (dotted line illustration) surrounded by a cladding (unnumbered) having an index of refraction less than that of the core 16. The organization of the emitter/detector 10 shown in FIGS. 1 and 2 and its substrate counting is typical of an integrated optic device environment.

The emitter/detector 10 inclues four planar photodetectors 18, 20, 22 and 24 arranged in an adjoining relationship on the substrate 12. The photodetectors 18, 20, 22 and 24 are rectangular in shape and are arranged with respective corners meeting at a point to form a larger rectangle, as seen in FIG. 1. The radiation receiving surfaces of the photodetectors 18, 20, 22 and 24 are aligned and each of the photodetectors 18, 20, 22 and 24 is configured to produce a photo-voltaic output in response to irradiation with optical energy exiting the end of the optical fibre 14. In general each of the photodetectors 18, 20, 22 and 24 includes terminal points (not specifically shown) by which they can be connected in series circuit with connector leads represented in schematic form at 26, 28 and 30 to provide the serially summed voltage output at least 32 and 34.

An optical energy emitter 36, such as a laser diode or a light emitting diode, is located within the area of radiation receiving surfaces of the photodetectors 18, 20, 22 and 24 at the mid-position of the photodetectors 18, 20, 22 and 24, as shown in FIG. 1, with electrical energy provided to the optical energy emitter 36 through terminal 38 and 40. If desired, a focusing device 42, such as the illustrated sperical lens, is mounted to the optical energy emitter 36 to assist in directing optical energy from the optical energy emitter 36 into the optical fibre 14.

In operation, the emitter/detector 10 is positioned relative to the optical fibre 14 so that optical energy emitted from the optical energy emitter 36 is directed into the core of the optical fibre 14 with minimal attenuation. In general, the optical fibre 14 should have an acceptance angle sufficiently large to accept the optical energy output of the optical energy emitter 36. To this end, the focussing device 42 can be configured to assure adequate optical coupling. The optical energy emitter 36 is driven by application of an appropriate signal on its input leads 38 and 40 to launch a desired optical signal onto the optical fibre 14. Conversely, energy transmitted through the optical fibre 14 and exiting the end of the optical fibre 14 will diverge somewhat and irradiate the various photodetectors 18, 20, 22 and 24 which, in turn, will produce a serially summed voltage output at leads 32 and 34. Since the surface area presented by the optical energy emitter 36 is small compared to that made available by the photodetectors 18, 20, 22 and 24, a substantial majority of the optical energy output of the optical fibre 14 is converted to electrical energy. In order to enhance efficiency, the focussing device 42 can also be configured to redirect some of the incident optical energy to the photodetectors 18, 20, 22 and 24 provided this redirection does not materially affect its primary function of directing optical energy from the optical energy emitter 36 to the end of the optical fibre 14.

In one form, the wavelength emitted by the optical energy emitter 36 and the spectral sensitivity of the photodetectors 18, 20, 22 and 24 are in the same general portion of the optical spectrum. In another form of the invention, the optical energy emitter 36 is designed to operate at a first wavelength while the various photodetectors 18, 20, 22 and 24 are configured, either by the selection of their photo-responsive material or by application or bandwidth filter coating or coatings, to respond to second wavelength. This latter cofiguration is suitable for effecting duplex wavelength communications.

Thus a combined emitter/detector is provided for optical fibre systems that both launches optical energy onto and detects optical presented from an optical fibre and in such a way that undesired attenuation consequent to the use of prior splitters is avoided.

Thus it will be appreciated from the above that a highly effective combined emitter/detector for optical fibre systems is provided. It wil be equally apparent and is contemplated that modification and/or changes may be made in the illustrated embodiment without departure from the invention. Accordingly, it is expressly intended that the foregoing description and accompanying drawings are illustrative of preferred embodiments only, not limiting, and that the true spirit and scope of the present invention will be determined by reference to the appended claims.

## Claims

1. An emitter/detector of the kind comprising an optical energy detector device for receiving optical energy from an end of an optical fibre (14) and an optical energy emitter device for emitting radiation to said optical fibre (14), characterised in that the optical energy detector device comprises a plurality of optical energy detectors (18, 20, 22, 24) having radiation receiving surfaces aligned to receive said optical energy, said optical energy emitter device comprising an optical energy emitter (36) positioned within the area of said radiation receiving surfaces of said optical energy detectors, for emitting said radiation.

2. An emitter/detector according to claim 1, characterised in that an optical focussing device (42) is provided for direction optical energy from the emitter (36) into the said optical fibre (14).

3. An emitter/detector according to claim 1 or claim 2, characterised in that said optical energy emitter (36) is a laser diode.

4. An emitter/detector according to claim 1 or claim 2, characterised in that said optical energy emitter (36) is a light emitting diode.

5. An emitter/detector according to any one of claims 1 to 4, characterised in that said plurality of optical energy detectors (18, 20, 22, 24) are connected in series.

6. An emitter/detector according to any one of claims 1 to 5, characterised in that four optical energy detectors (18, 20, 22, 24) are provided, each optical energy detector being rectangular in shape and the detectors being arranged with respective corners meeting at a point to form a larger rectangle, the optical energy emitter (36) being arranged at said point.

0290242

FIG.1.

FIG.2.